Europäisches Patentamt

European Patent Office

Office européen des brevets

(11) Publication number: **0 071 850**
**B1**

(12) **EUROPEAN PATENT SPECIFICATION**

(45) Date of publication of patent specification: **04.06.86**

(21) Application number: **82106692.5**

(22) Date of filing: **23.07.82**

(51) Int. Cl.⁴: **G 06 K 19/08**

(54) **Production of magnetic recording cards.**

(30) Priority: **24.07.81 JP 116228/81**

(43) Date of publication of application:
**16.02.83 Bulletin 83/07**

(45) Publication of the grant of the patent:
**04.06.86 Bulletin 86/23**

(84) Designated Contracting States:
**DE FR GB**

(56) References cited:
**FR-A-2 139 347**
**FR-A-2 161 663**
**FR-A-2 230 262**
**GB-A-2 060 487**
**US-A-4 132 350**

(73) Proprietor: **DAI NIPPON INSATSU KABUSHIKI KAISHA**
**1-1, Kaga-Cho 1-Chome Ichigaya Shinjuku-Ku Tokyo 162 (JP)**

(72) Inventor: **Suzuki, Norimoto**
**5-473, Hanakoganei Kodaira-Shi Tokyo-To (JP)**
Inventor: **Nishikawa, Seiichi**
**2-15-12, Nukui Kita-Machi Koganei-Shi Tokyo-To (JP)**
Inventor: **Inoue, Shunji**
**38, Asahigaoka Kanagawa-Ku Yokohama-shi Kanagawa-Ken (JP)**

(74) Representative: **Patentanwälte Dipl.-Ing. Klaus Behn Dipl.-Phys. Robert Münzhuber Widenmayerstrasse 6/IV D-8000 München 22 (DE)**

Courier Press, Leamington Spa, England.

## Description

This invention relates to a magnetic recording card and a process for producing the same and more specifically to a magnetic plastic card suitable for use as credit cards, bank cards, ID cards, and the like and to a process for producing the same.

In general, a magnetic plastic card comprises an opaque core sheet made of a synthetic resin such as polyvinyl chloride and transparent oversheets similarly made of polyvinyl chloride or like resin and covering the surfaces of the core sheet and, moreover, has a magnetic recording layer for memorizing or storing necessary information. This magnetic recording layer is provided on an oversheet, and a marking such as an inscription or a picture as visible information is printed on the core sheet.

Thus, in a conventional magnetic plastic card, the magnetic recording layer and the visible marking are provided in a mutually independent state. Moreover, the color of the magnetic recording layer is generally limited to brown or dark brown. For these reasons and further for the reason that the magnetic recording layer is provided on the oversheet, when a visible marking is provided on the core sheet under the magnetic recording layer, it is concealed by the magnetic recording layer, whereby the possible designs of magnetic plastic cards have been greatly limited.

Furthermore, in the case where a magnetic recording layer is provided over a visible marking, the existence of the magnetic recording layer is emphasized, and, as a consequence, the design effect of the visible marking provided in the card tends to be easily lost. For this reason, there have been instances wherein it was necessary to revise the visible marking of a card created by the card issuer to harmonize with the magnetic recording layer. Concealment of the brown color or the dark brown color of the magnetic recording layer and coloring of this layer with a bright hue are being practiced, but the concealment by the magnetic recording layer of the visible marking printed on the core sheet remains unchanged.

From US—A—4,132,350 a process for producing magnetic cards is known which comprises a first step of forming a magnetic transfer sheet comprising a temporary support and a magnetic recording layer stock of island form to be transferred laminated on the temporary support, a second step of transferring the magnetic recording layer of island form onto a card substrate by placing the surface of the magnetic recording layer of the magnetic transfer sheet thus formed against the surface of the card substrate, heating the magnetic recording layer and removing the temporary support, and a third step of imbedding the magnetic recording layer by placing a press plate on the magnetic recording layer thus transferred and heating and pressing the same into the card substrate until the outer surface of the magnetic recording layer lies flush in the same plane as that of the card substrate. The disposition of the layers comprises preparing a paint or ink by dissolving or dispersing resins constituting these layers and other ingredients in a suitable liquid medium, and applying or printing successively the paint or ink thus prepared on the over sheet by a coating method as the bar coating or roller coating method or the gravure printing method. A magnetic card manufactured by this known method comprises a card substrate, a planar magnetic recording layer of island form being provided on at least one surface of the card substrate and being so embedded that the outer surface of the magnetic recording layer lies flush in the same plane as that of the card substrate. This known magnetic card shows ragged and fuzzy edges of the several layers.

It is an object of this invention to provide a process for producing magnetic recording cards (hereinafter referred to as magnetic cards) which process has a step in which the magnetic recording layer of each card is transferred in a state wherein it is not conspicuous as such in external appearance onto a card substrate, whereby the entire magnetic card has an excellent aesthetic quality and to provide magnetic cards produced by this process.

With this object in view, we have carried out studies as a result of which we have discovered that the causes of the deleterious effect of the magnetic recording layer of a magnetic card obtained by the conventional process on the aesthetic appearance of that card are as follows.

a) In general, the color of the magnetic recording layer is brown or dark brown and is in strong contrast with the background color of an ordinary card substrate or a design or pattern.

b) A stripe-form magnetic recording layer which is customarily used appeals to a viewer as a magnetic recording layer because of its shape and destroys the harmony with another design or pattern.

c) In the case where a magnetic recording layer of "island" form is provided in order to avoid the above difficulty b), the edges of the magnetic recording layer become ragged because of limitation of the fabrication process.

d) The surfaces of the magnetic recording layer and the card substrate do not lie flush in one plane and are not level.

As a result of our further research, we have found that, if it is possible to overcome the above difficulties c) and d) by improving the production process and to imbed a magnetic recording layer of island form with smooth, fair-line edges in a card substrate so that the upper surfaces of both lie flush in the same plane, the magnetic recording layer itself can be utilized as one kind of pattern harmonizing with the surrounding design, and, additionally, to solve the problems of a) and b) above.

We have found further that, for overcoming the difficulties of c) and d) above, the combination of the steps of carrying out a limited-depth or partial die cutting of a magnetic recording layer stock of a magnetic transfer sheet comprising a temporary support and a magnetic recording layer stock formed uniformly on the temporary support, removing the unnecessary parts thereby to form beforehand on the temporary support a magnetic recording layer of a desired shape having smooth, fair-line edges, then transferring this magnetic recording layer onto a card substrate, and imbedding this layer in the card substrate is very effective. That is, the above mentioned partial die-cutting step not only produces smoother and fairer edges than the conventional hot-stamping step but also can produce a magnetic recording layer shape of greater fineness, whereby the magnetic recording layer itself can be effectively utilized as a design pattern.

In seeking to achieve the aforestated object, this invention is based on the above described findings and is embodied in the following four fundamental modes of practice and in the magnetic cards produced thereby.

In a first fundamental mode of practice of the invention there is provided a process for producing magnetic cards which comprises:

a first step of forming a magnetic transfer sheet by making a partial die cut of a closed figure in only the magnetic recording layer stock of a magnetic transfer sheet comprising a temporary support and the magnetic recording layer stock to be transferred laminated on the temporary support and thereafter peeling off and removing, from the temporary support, parts of the magnetic recording layer stock outside of the region encompassed by said closed-figure partial die cut thereby to cause a magnetic recording layer of island form of said region to be left on the temporary support;

a second step of transferring the magnetic recording layer of island form onto a card substrate by placing the surface of the magnetic recording layer of the magnetic transfer sheet thus formed against the surface of the card substrate, heating the magnetic recording layer and removing the temporary support; and

a third step of imbedding the magnetic recording layer by placing a press plate with a mirror-finished surface on the magnetic recording layer thus transferred and heating and pressing the same into the card substrate until the outer surface of the magnetic recording layer lies flush in the same plane as that of the card substrate.

According to a preferred embodiment of the first fundamental mode of this invention, there is provided a process for producing magnetic cards comprising the three steps of the above described first fundamental mode of practice and further comprising a fourth step of printing a printed layer of characters and design on the outer surface of the magnetic recording layer of the structure obtained after the third step of imbedding the magnetic recording layer and a fifth step of leveling the card surface by placing, after the fourth printing step, a press plate with a mirror-finished surface against the printed layer thus printed and heating and pressing the printed layer thereby to cause the outer surfaces of the printed layer and the card substrate to lie flush in the same plane.

According to this invention in a second fundamental mode of practice thereof, there is provided a process for producing magnetic cards which comprises the first step of the above described process embodying the first fundamental mode of practice to form the magnetic transfer sheet having the magnetic recording layer of island form and further comprises:

a second step of placing the outer surface of the magnetic recording layer of island form of the magnetic transfer sheet thus formed against a surface of an oversheet and transferring the magnetic recording layer onto the oversheet by heating the transfer sheet and removing the temporary support;

a third step of securing or tentatively securing by adhesion the oversheet to a core sheet; and

a fourth step of imbedding the magnetic recording layer by placing a press plate with a mirror-finished surface against the structure obtained by the third step and heating and pressing the same thereby to imbed the magnetic recording layer so that its outer surface lies flush in the same plane as that of the oversheet.

According to a preferred embodiment of the second fundamental mode of this invention there is provided a process for producing magnetic cards which comprises the four steps of the above described process embodying the second fundamental mode of practice of the invention and further comprises a fifth step of printing a printed layer of characters and design on the outer surface of the magnetic recording layer of the structure obtained by the fourth step of imbedding the magnetic recording layer and a sixth step of leveling the card surface by placing, after the fifth printing step, a press plate with a mirror-finished surface against the oversheet and heating and pressing the same thereby to cause the outer surfaces of the printed layer and the oversheet to lie flush in the same plane.

According to this invention in another aspect thereof, there are provided magnetic cards fabricated in accordance with preferred embodiments of the above stated process of the invention. Each of these cards is characterized in that the magnetic recording layer of island form has smooth, fair peripheral edges, and that a printed layer of characters and design is provided on and so imbedded in the magnetic recording layer that the outer surface of the printed layer lies flush in the same plane as the outer surface of the recording layer. The card substrate can comprise a laminated structure of an opaque core sheet and an oversheet made of a transparent resin, and the magnetic recording layer is so imbedded in the oversheet that their outer surfaces lie flush in the same plane.

The term "island form" as used herein designates a physical state wherein the magnetic recording layer is formed in a position separated from the peripheral edges of the magnetic card.

The nature, utility, and further features of this invention will be more clearly apparent from the following detailed description beginning with a consideration of a conventional process and of general aspects of this invention and concluding with specific examples of practice according to the invention when read in conjunction with the accompanying drawings, briefly described below.

In the drawings, the views other that perspective views and bottom views are all elevational views in vertical section taken in planes parallel to the thickness direction of the layers shown and will be referred to as sections, the upper parts of these views corresponding to the upper or front faces of the magnetic cards.

In the drawings:

FIG. 1 is a perspective view of a known magnetic card;

FIGS. 2, 3, and 4a are sections of a magnetic card indicating steps in a known process for hot stamping of the magnetic recording layer;

FIG. 4b is a perspective view of a magnetic card fabricated by the steps indicated in FIGS. 2, 3, and 4a;

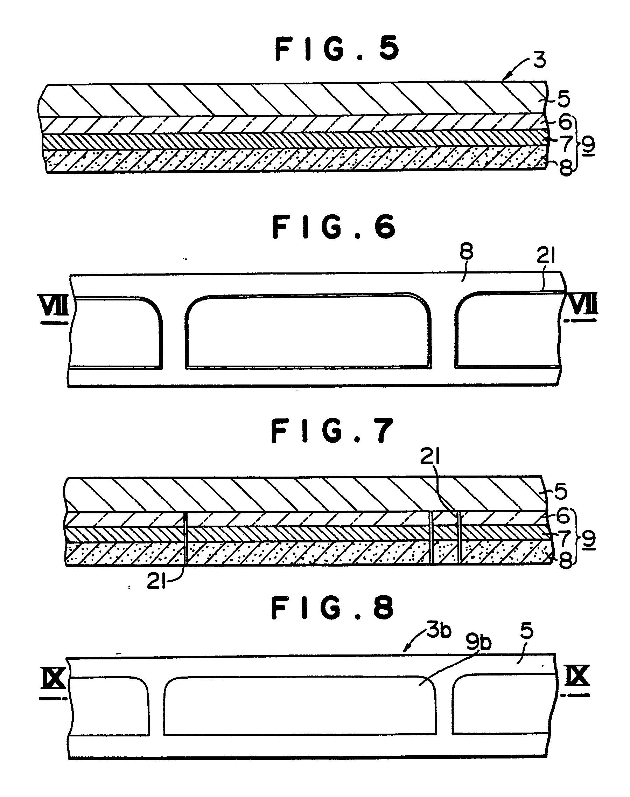

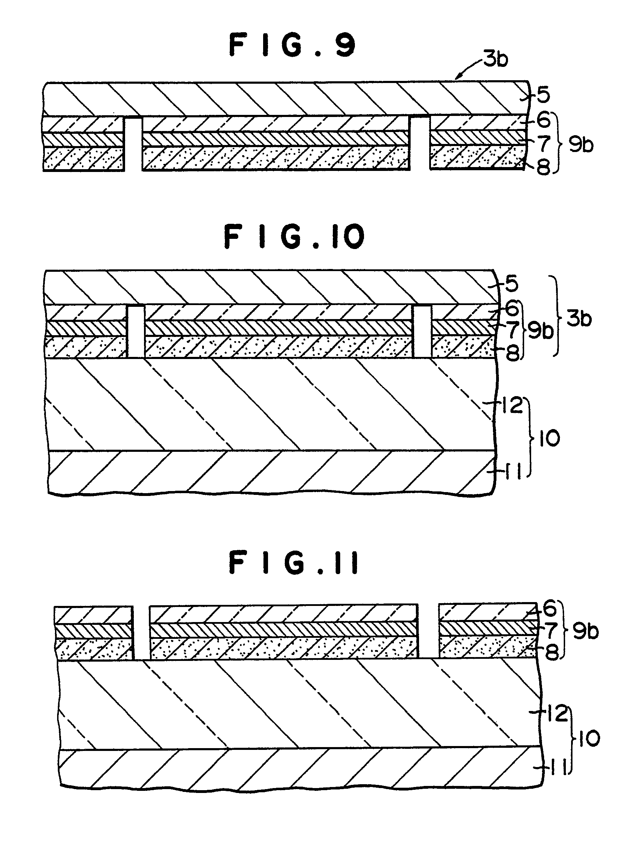

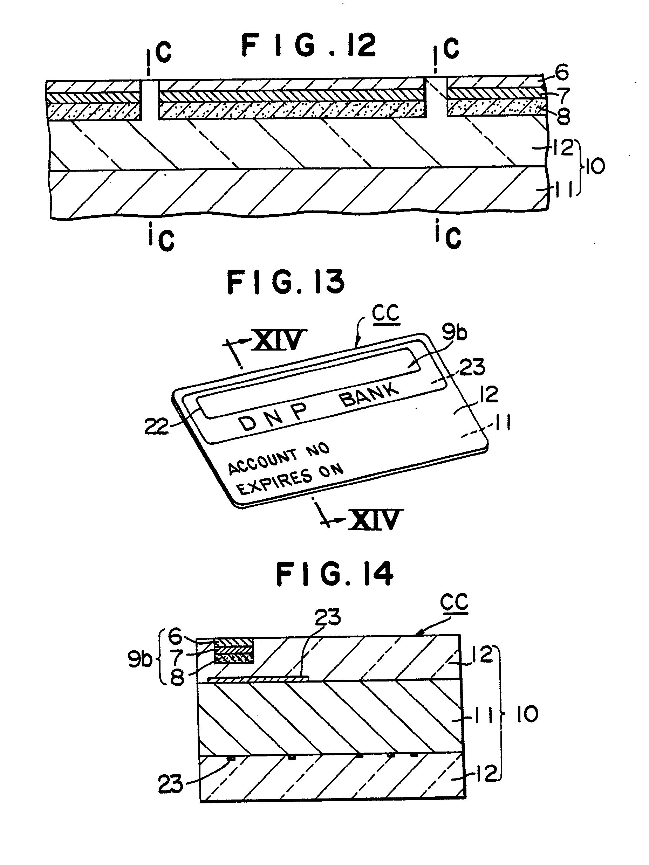

FIGS. 5 through 12 are views illustrating steps in the first fundamental mode of practice of the process of this invention, FIG. 5 being a section of one example of a magnetic transfer sheet, FIG. 6 being a bottom view of the magnetic transfer sheet after partial die cutting, FIG. 7 being a section taken along the line VII—VII in FIG. 6, FIG. 8 being a bottom view of the magnetic transfer sheet after removal of superfluous parts, FIG. 9 being a section taken along the line IX—IX in FIG. 8, FIGS. 10, 11 and 12 being sections indicating the steps of transfer and pressing while heating, FIG. 13 being a perspective view of the product magnetic card, and FIG. 14 being a section taken along the line XIV—XIV in FIG. 13;

FIGS. 15 through 25 are sections respectively showing other examples of laminar construction of magnetic transfer sheets suitable for use in the process of the invention;

FIGS. 26 through 36 are sections respectively showing the laminar structures of examples of product magnetic cards produced by using the magnetic transfer sheets of FIGS. 15 through 25 in accordance with the first and second fundamental modes of practice of the process of the invention;

FIGS. 37 through 40 are views indicating steps in the preferred embodiment of the first fundamental mode of practice of the process of the invention, FIGS. 37 and 38 being sections indicating intermediate steps, FIG. 39 being a perspective view of the product magnetic card, and FIG. 40 being a section taken along the line XL—XL in FIG. 39;

FIGS. 41 through 52 are sections of product magnetic cards produced by using the magnetic transfer sheets of FIGS. 15 through 25, respectively, according to the preferred embodiments of the first and second fundamental modes of practice of the process of the invention; and

FIGS. 53 through 56 are sections indicating intermediate steps in the second fundamental mode of practice of the process of the invention.

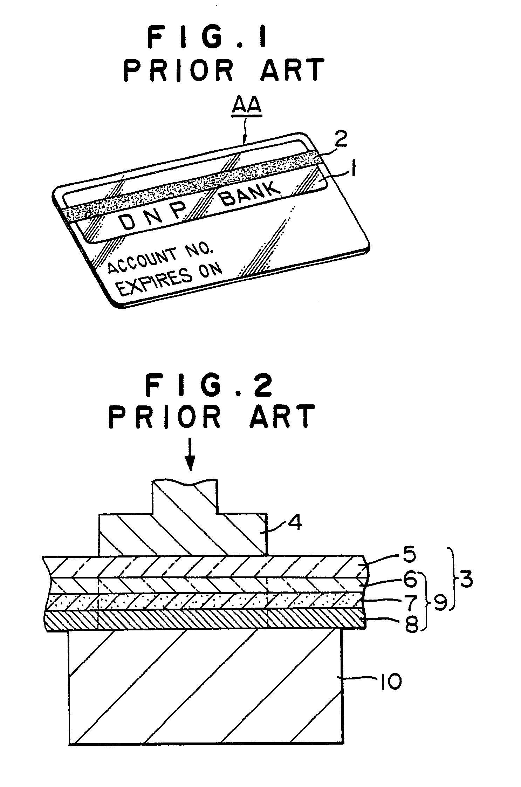

As conducive to a full understanding of this invention, a typical example of a conventional magnetic card and a process for producing the same will first be described briefly with reference to FIGS. 1 through 4b.

As stated hereinbefore, in the case of a conventional magnetic card AA as shown in FIG. 1, an ordinary visible marking 1 on the card AA is concealed by a magnetic recording layer 2 of brown or dark brown color and the design effect is greatly impaired.

FIGS. 2 through 4b indicate the steps of a typical example of the process for forming a planar (or laminar) magnetic recording structure or piece in "island" state by a conventional hot stamping method using a magnetic transfer sheet 3 and a heating head or hot die 4. In this process, a magnetic transfer sheet 3 prepared by forming on a temporary support 5 a magnetic recording piece stock layer 9 comprising a separation-aiding or releasing layer 6, a colored layer 7, and a magnetizable layer 8 is superposed on a card substrate 10 so that the magnetizable layer 8 is adjacently contacting the substrate 10.

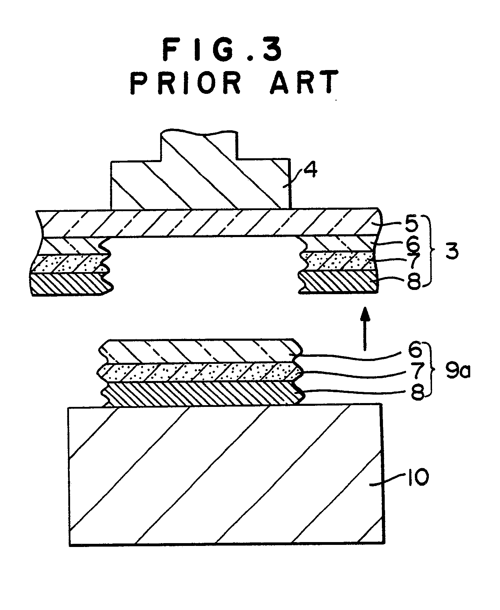

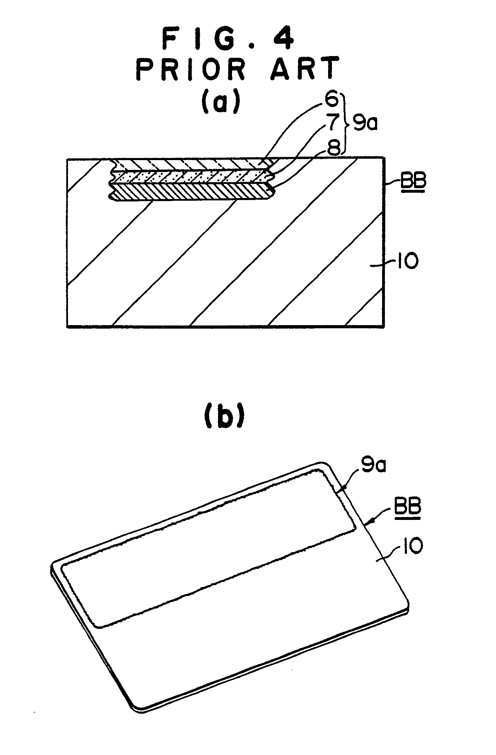

Then, as shown in FIG. 2, a hot die 4 of a desired shape is pressed downward against this assembly of layers. Thereafter, the hot die 4 and the magnetic transfer sheet 3 are lifted off the substrate 10, whereupon a portion 9a of the magnetic recording piece stock layer 9 is transferred in a shape corresponding to the hot die 4 onto the card substrate 10 because of the adhesive strength of a binder within the magnetizable layer 8 by which it adheres to the substrate 10 as indicated in FIG. 3, the releasing layer 6 of this portion 9a separating away from the temporary support 5. Then, by means of a press plate of mirror finish, the magnetic recording layer 9a is heated and pressed and is thus forced to be imbedded in the card substrate 10, the upper surfaces of the layer 9a and the substrate becoming flush as indicated in FIGS. 4a and 4b, whereupon a magnetic card BB is obtained.

In this case, however, as mentioned hereinbefore, because of the high strength of the magnetic recording layer stock 9 due to its great thickness, the layer shearing at the time of the above described hot stamping is poor, whereby the edges of the magnetic recording piece or layer 9a thus formed (FIGS. 3 and 4) become ragged or fuzzy and not only impair the aesthetic appearance but also impart the impression that the magnetic recording layer has been pasted on the card substrate 10.

The process for producing a magnetic card according to this invention will now be described with respect to a first example according to the first fundamental mode of practice thereof, with reference to FIGS. 5 through 14.

First, as indicated in FIG. 5 in section taken in the thickness direction, a magnetic transfer sheet 3 in which a magnetic recording layer stock 9 comprising a releasing layer 6, a colored layer 7, and a magnetizable layer 8 is formed on a temporary support 5 is prepared. Then, as indicated in FIGS. 6 and 7, a partial or limited-depth, die-cutting process step is carried out so as to cut the magnetic recording layer stock 9 but not to cut the temporary support 5 by means of a cutting die (not shown) of a desired shape thereby to form in the magnetic recording layer stock 9 a partial cut line 21 of a loop or closed figure corresponding to the desired island form. Then the surplus portion of the layer stock outside of the partial cut line 21 is cut away and removed and a magnetic transfer sheet 3b, as shown in FIGS. 8 and 9, in which a magnetic recording layer or piece 9b of island form is left remaining is formed.

This transfer sheet 3a thus obtained is superposed, as indicated in FIG. 10, on the oversheet 12 of a card substrate 10 comprising a core sheet 11 and the oversheet 12 and is then heated by suitable heating means such as heating plates (not shown). Then, by peeling off the temporary support 5, the magnetic recording layer 9b of island form is transferred onto the oversheet 12 of the card substrate as indicated in FIG. 11. The magnetic recording layer 9b on the substrate 10 is then heated and pressed by press plates (not shown) having a mirror-finished surface thereby being imbedded in the card substrate 10, until the upper surfaces of the magnetic recording layer 9b and of the substrate 10 are flush, that is, lie in the same plane, as indicated in FIG. 12.

By cutting the structure of FIG. 12 thus obtained along the planes indicated by lines C—C, one example CC of a magnetic card of this invention, as shown in FIGS. 13 and 14, is obtained. FIG. 14 is a section corresponding to the view in direction of line XIV—XIV in FIG. 13. A feature of a magnetic card produced in the above described manner according to this invention is that the edges of its magnetic recording layer 9b are very smooth, fair, and definite in comparison with those of the aforedescribed conventional card.

The magnetic card CC, as shown in FIGS. 13 and 14, has an ordinarily printed layer 23 for displaying visible information in harmony with the pattern of the magnetic recording layer 9b (that is, not concealed thereby or being of such a color or pattern that the concealment by the magnetic recording layer will not be harmful). This visible information layer 23 is formed beforehand in accordance with an ordinary card printing process on the core sheet 11. In FIGS. 10, 11, and 12, this layer 23 is omitted for the purpose of brevity.

The process of producing the magnetic card of this invention, including the various materials used, will now be described in greater detail.

First, for the core sheet 11, white opaque polyvinyl chloride, for example, can be used. For the oversheets 12, transparent polyvinyl chloride, for example, can be used. The oversheets 12 can be bonded by heat fusion onto the opposite surfaces of the core sheet 11, or the oversheets 12 and the core sheet can be tentatively secured together with an adhesive at parts thereof other than the forming part of the final product card to obtain a laminated structure which is used as the card substrate 10. The tentatively secured core sheet 11 and the oversheets 12 are formed into an integral card substrate in the transfer step or in the heating and pressing step for imbedding the magnetic recording layer 9b.

Next, the materials of the various parts of the magnetic transfer sheet 3 will be described. First, the temporary support 5 is made of a sheet of a thickness of the order of 25 to 100 μm of a polymer such as polyester, polyethylene, polypropylene, or polycarbonate.

The releasing layer 6 is obtained by coating the temporary support 5 with a paint comprising a resin such as an acrylic ester resin or a rosin derivative resin to a coating thickness (dried) of 0.2 to 2 μm. As described hereinafter, this releasing layer 6 is not indispensable in all cases but is preferably used for carrying out the transfer step smoothly and for protecting the colored layer 7 and the magnetizable layer 8.

The colored layer 7 is provided for the purposes of concealing the color of the magnetizable layer 8 and of utilizing the magnetic recording layer 9b positively and aesthetically and is preferably provided except where the color of the magnetizable layer 8 itself is desirable, or where the color of the magnetizable layer 8 has a cryptic color relation to the color of the surrounding card substrate. This colored layer 7 is obtained by coating the releasing layer 6 with a coloring paint prepared by dispersing a desired coloring matter (pigment or dyestuff) in a binder having as its predominant ingredient a thermoplastic resin such as a vinyl chloride-vinyl acetate copolymer, an acrylic resin, or a cellulose derivative resin, the coloring paint being applied by a gravure coating method, a roll coating method, or like suitable method to a coating thickness of 0.5 to 10 μm (dried). It is desirable that this colored layer 7 be thin when the electric-magnetic conversion characteristics are considered. On the other hand, when the hue is considered, a thick colored layer 7 is desirable, in general. Accordingly, this thickness should be determined in view of the magnetization process apparatus, standards, and other pertinent conditions.

The magnetizable layer 8 is formed by applying by the roll coating method or some other effective method a magnetic paint prepared by dispersing a magnetic powder of $\gamma$-$Fe_2O_3$, $Co$-$Fe_3O_4$, $CrO_2$, or the like in a binder having as its predominant ingredient a thermoplastic resin such as a vinyl chloride-vinyl acetate copolymer, a cellulose derivative resin, or a vinyl chloride resin, the magnetic paint being applied as a coating of a thickness of approximately 5 to 25 μm (dried).

The cutting die used for the partial die cutting of the magnetic recording layer can be of any type provided that it has a closed-figure shape for producing the desired island shape and has ample hardness and sharpness for die cutting of plastics. The partial die cutting can be effectively carried out by means of, for example, a seal-printing die-cutting press.

The transfer of the magnetic recording layer 9b of island shape (FIG. 10) can be carried out, for example, by using a hot die (not shown) of dimensions somewhat greater than those of the magnetic recording layer of island shape to apply heat and pressure under the conditions of a heating temperature of 150 to 200°C, a pressure of 50 to 250 kg/cm$^2$, and an application time of 0.5 to 2 seconds thereby to cause the magnetic recording layer 9b to adhere to the card substrate 10.

The press plate (not shown) used for imbedding the magnetic recording layer 9b thus transferred into the card substrate 10 (FIGS. 11 and 12) is, for example, a stainless-steel plate of 0.5-mm thickness having a mirror-finished surface. The heating and pressing conditions for this imbedding step are, for example, a heating temperature of 120 to 180°C, a pressure of 10 to 50 kg/cm$^2$, and a process time of 5 to 30 seconds.

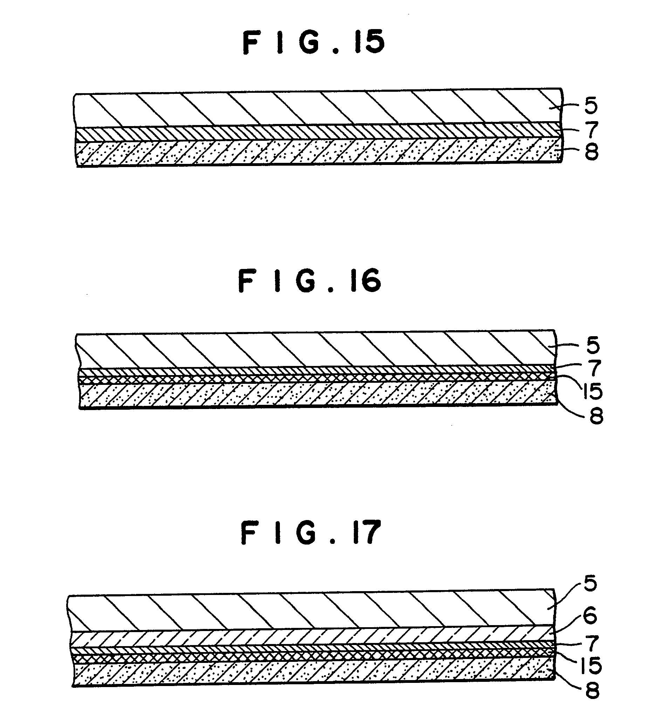

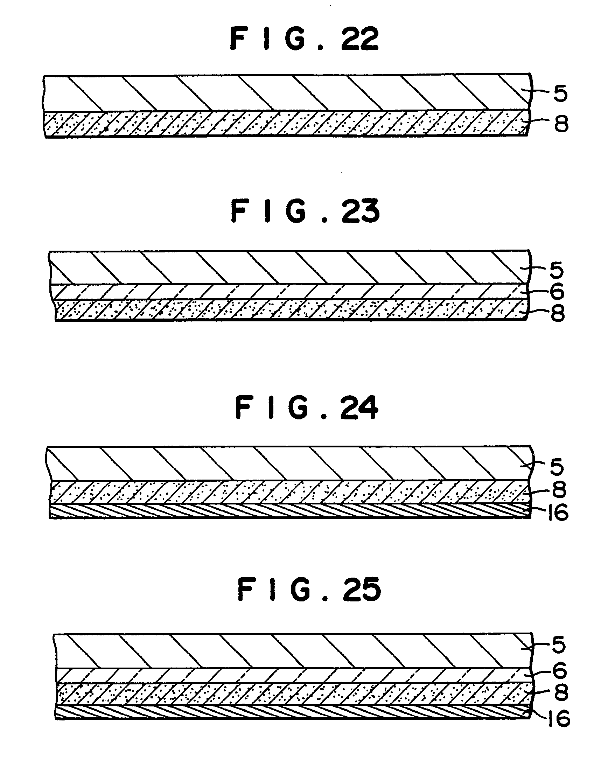

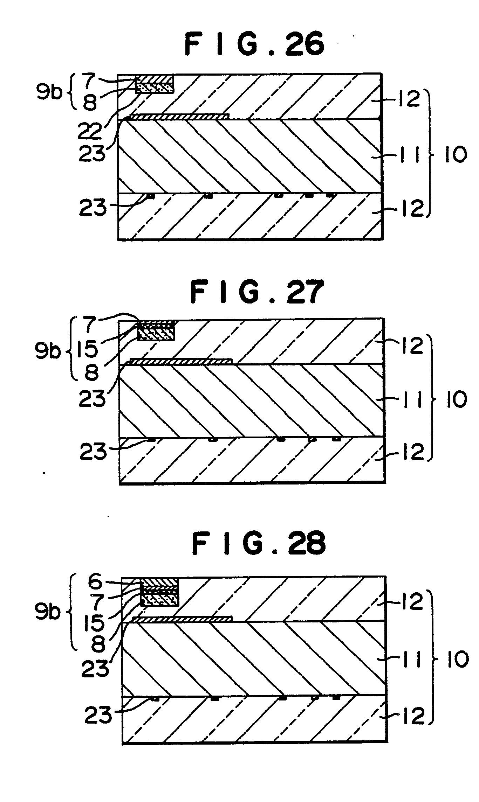

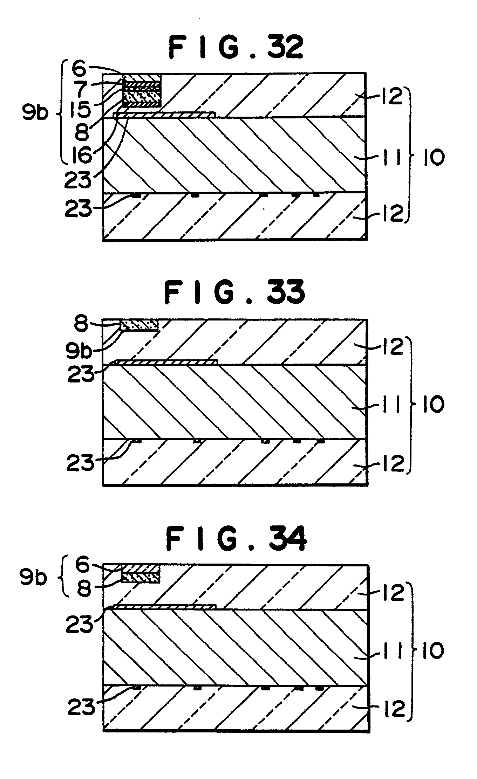

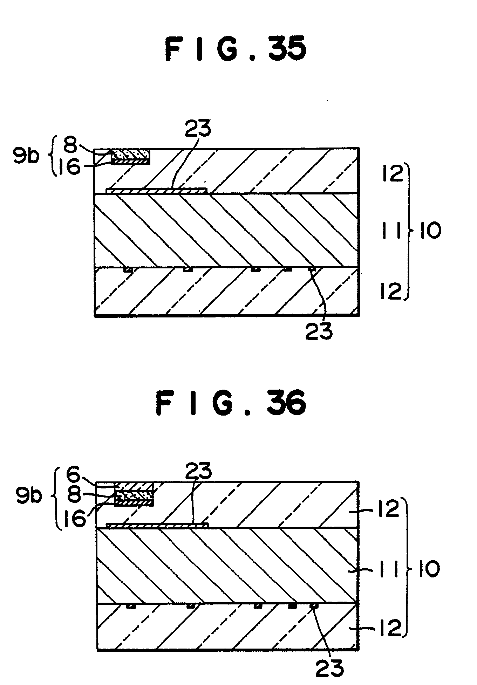

In the foregoing part of this disclosure, the process of producing magnetic cards of this invention and resulting product have been described with respect to a representative example of the first fundamental mode of practice and an example of the resulting magnetic card structure. By using magnetic transfer sheets of the laminar structural arrangements as shown in FIGS. 15 through 25 instead of that of the magnetic transfer sheet 3 illustrated in FIG. 5, other examples of magnetic cards respectively of the laminar constructions shown in FIGS. 26 through 36 are obtained according to the first fundamental mode of practice of the process of the invention in correspondence with that shown in FIG. 14.

The magnetic transfer sheets shown in FIGS. 15 through 25 are obtained by respectively changing the combinations of the temporary support 5 and the magnetizable layer 8, which are indispensable elements, and, in addition according to necessity, the releasing layer 6, the colored layer 7, a non-magnetic metal layer 15, and a heat-sensitive adhesive layer 16. Here, the releasing layer 6 and the colored layer 7 are as described hereinbefore. The nonmagnetic metal layer 15 of thin film thickness effectively conceals the magnetizable layer 8 and is provided according to necessity for the purpose of imparting a good hue by merely providing a relatively thin colored layer 7 on this nonmagnetic metal layer 15, while retaining good electric-magnetic conversion characteristics. This layer 15 is formed by vapor deposition of, for example, aluminum, tin, or the like to a thickness of the order of 500Å, for example. By using this nonmagnetic metal layer 15, a beautiful coloring can be amply imparted with a thickness of the colored layer 7 of 0.5 to a number of µm.

The heat-sensitive adhesive layer 16 is provided when necessary for imparting good heat transferability of the magnetic transfer sheet relative to the card substrate while retaining a high concentration of magnetic particles in the magnetizable layer 8 and therefore retaining good magnetic characteristics. For this layer 16, a layer containing a thermoplastic resin such as an acrylic resin or a vinyl chloride-vinyl acetate copolymer as its predominant ingredient and having a thickness of the order of 1 to 15 µm is used.

Next an example in accordance with the preferred embodiment of the first fundamental mode of practice of the process for producing magnetic cards of this invention will be described.

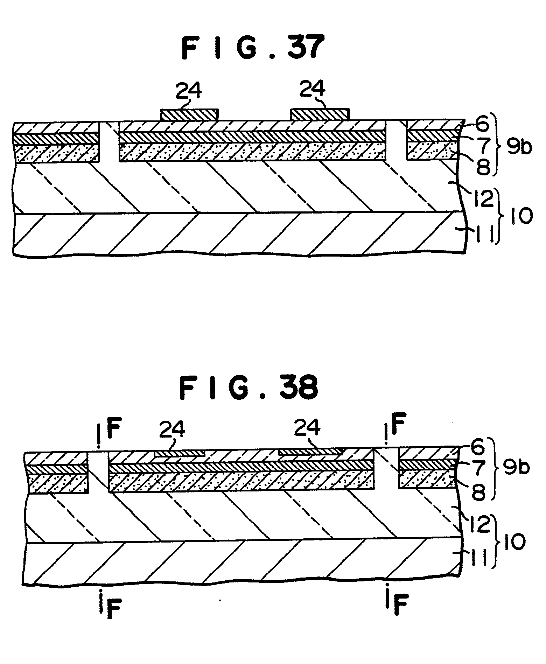

In this case, the structure shown in FIG. 12 is first prepared according to the first fundamental mode of practice. Then, as shown in FIG. 37, a printed lettering layer 24 of a thickness of 1 to 20 µm (dried) is formed by a process such as silk-screen printing on the magnetic recording layer 9b imbedded in the card substrate 10 of the structure thus prepared. The material constituting this printed lettering layer 24 is substantially the same as that of the colored layer 7. If this printed lettering layer 24 is excessively thick, it will affect the electric-magnetic conversion characteristics and give rise to a great drop in the output. For this reason, it is desirable that this layer 24 be made as thin as possible without losing its desired display effect.

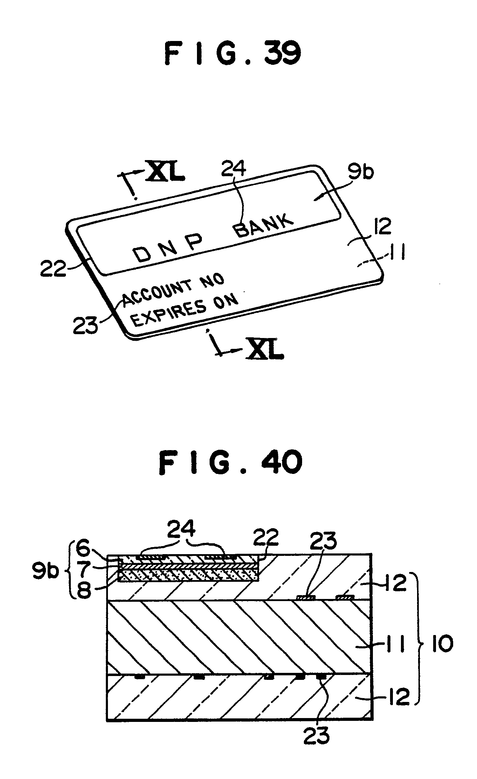

Then, by heating and pressing this printed lettering layer 24 with a mirror-finished press plate (not shown), it is imbedded into the magnetic recording layer 9b, and a structure as shown in FIG. 38 wherein the upper surfaces of the card substrate 10, the magnetic recording layer 9b, and the printed lettering layer 24 all lie flush in the same plane is obtained. Then, by cutting this structure along the planes indicated by lines F—F, a magnetic card as shown in FIGS. 39 and 40 is obtained.

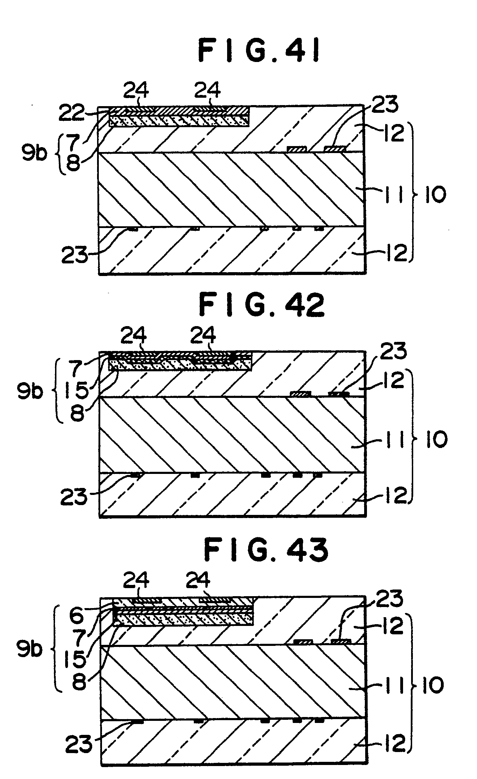

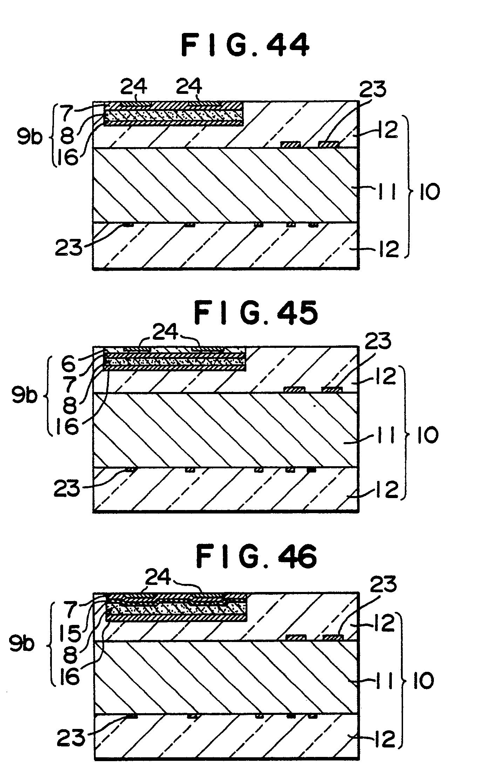

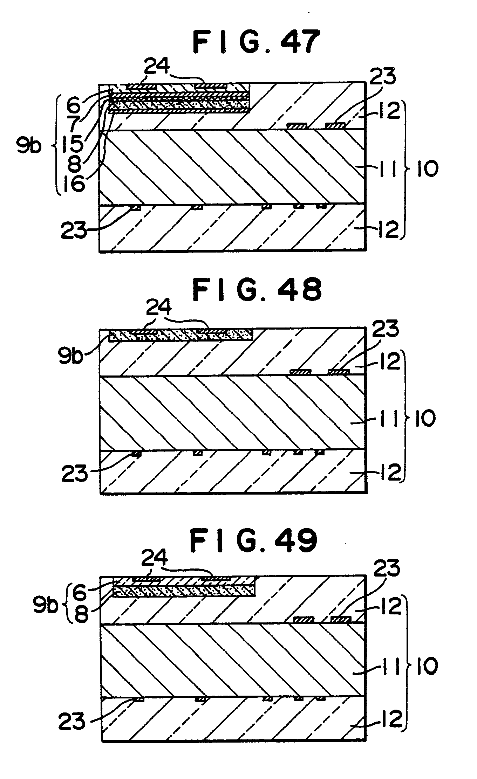

In this case, also, magnetic cards of modified structures shown in FIGS. 41 through 51 can be obtained by using magnetic transfer sheets of the structures shown in FIGS. 15 through 25, respectively, in place of that shown in FIG. 5.

In the preferred embodiment of the first fundamental mode of practice of the process for producing magnetic cards according to this invention as described above, the magnetic recording layer 9b not only is caused to contribute, itself, to the aesthetic appearance of the card as a pattern but also affords an area for forming an additional pattern such as a printed layer of characters and/or a picture pattern. Thus, a magnetic card which is superior by that much in design effect can be obtained.

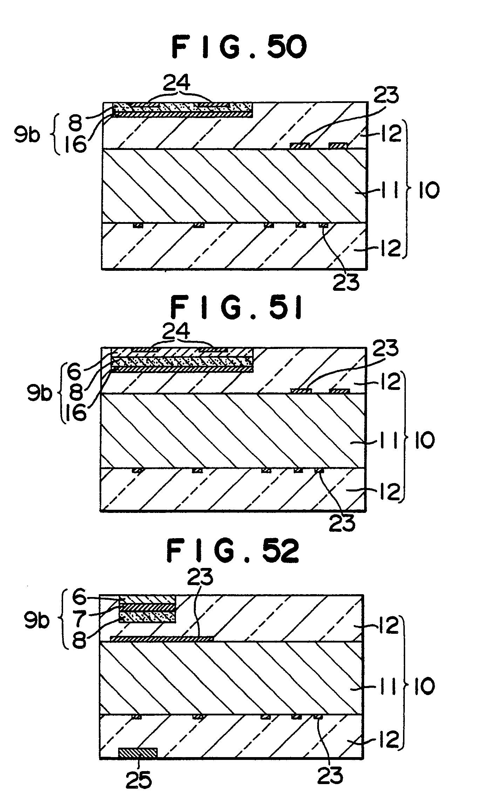

In correspondence to FIG. 14, it is also possible as shown in FIG. 52 to provide additionally a commonly used magnetic stripe separate from the magnetic recording layer 9b of island form for both the first fundamental mode of practice and its preferred embodiment.

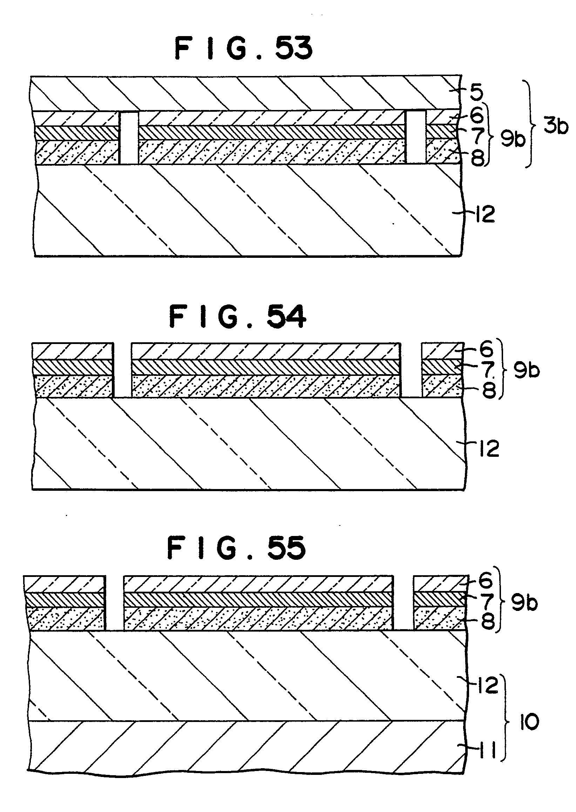

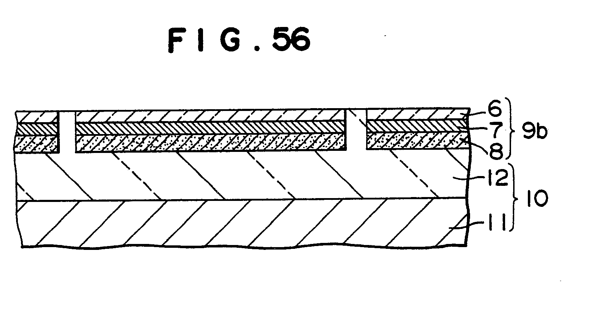

The second fundamental mode of practice of the process of this invention for producing magnetic cards is a repetition of the aforedescribed first fundamental mode with the use of an oversheet 12 instead of a card substrate 10 comprising a laminated structure of a core sheet 11 and oversheets 12. More specifically, in accordance with the first fundamental mode, the magnetic transfer sheet 3b shown in FIG. 9 is superposed on an oversheet 12 (FIG. 53), and after heating, the temporary support 5 is peeled off to transfer the magnetic recording layer 9b in island form onto the oversheet 12 (FIG. 54). The oversheet 12 of the structure shown in FIG. 54 obtained in this manner is then bonded or tentatively bonded with an adhesive to a core sheet 11, and the resulting laminated structure is heated and pressed with a press plate of mirror-finish surface (not shown) thereby to imbed the magnetic recording layer 9b so that its upper surface lies flush in the same plane as that of the card substrate as shown in FIG. 56 and, at the same time, to bond by heat fusion the tentatively bonded oversheet 12 to the core sheet 11.

The structure thus obtained as shown in FIG. 56 is essentially the same as the structure shown in FIG. 12. By subsequently cutting this structure similarly as in the first fundamental mode of practice, a magnetic card similar to that shown in FIGS. 13 and 14 is obtained.

Furthermore, in the preferred embodiment of the second fundamental mode of practice of the process of this invention for producing magnetic cards, with respect to the structure as shown in FIG. 56 obtained by the second fundamental mode of practice, a printed layer 24 of characters and/or a picture pattern is formed on the magnetic recording layer 9b as indicated in FIGS. 37 and 38 in the preferred embodiment of the first fundamental mode of practice. Then, with the use of a press plate of mirror-finish surface, the structure is heated and pressed so that the upper surface of the printed layer 24 of characters and/ or a picture pattern lies flush in the same plane as those of the magnetic recording layer 9b and the card substrate 10.

A magnetic card produced by this preferred embodiment of the second fundamental mode of practice is identical to that produced by the aforedescribed preferred embodiment of the first fundamental mode of practice. By using magnetic transfer sheets respectively of different laminated construction, the structures as indicated in FIGS. 39 through 51 can be obtained.

In order to indicate more fully, the nature and utility of this invention, the following specific examples of practice in concrete form are set forth, it being understood that these examples are presented as illustrative only.

### Example 1
(according to the first fundamental mode of practice)

The surface of a temporary support comprising a polyester film of 50-µm thickness was coated with a paint of an acrylic ester resin to a coating thickness of 0.5 µm by a gravure coating process thereby to form a releasing layer.

This layer was then coated with a coloring paint to a coating thickness of 2 µm by a gravure coating process, the coloring paint comprising a vinyl chloride-vinyl acetate copolymer as a principal binder and a desired coloring matter dispersed therein. Thus a colored layer was formed.

This colored layer was then coated with a magnetic paint to a coating thickness of 15 µm by a roll coating process, the magnetic paint comprising a vinyl chloride-vinyl acetate copolymer as a principal binder and magnetic powder particles of $\gamma$-$Fe_2O_3$ dispersed therein. Thus a magnetizable layer was formed, and a magnetic transfer sheet corresponding to that shown in FIG. 5 was obtained.

Then, with the use of a seal-printing, die-cutting press and, moreover, a cutting die of a desired shape, partial die cutting from the magnetic recording layer side was so carried out as not to cut the temporary support. Superfluous parts of the magnetic recording layer, other than the desired part thereof of island form, were then removed, thereby to form a magnetic transfer sheet, as shown in FIGS. 8 and 9, in which the magnetic recording layer of island form was caused to remain.

Separately, a card substrate was fabricated by laminating oversheets of transparent polyvinyl chloride of a thickness of 0.1 mm on the front and back surfaces of a core sheet of bluish white polyvinyl chloride on the front and back faces of which patterns had been printed by offset printing. The above described magnetic transfer sheet was placed on this card substrate at a desired position thereof and was heated and pressed against the card substrate with a hot die, which was one size larger than the shape of the magnetic recording layer of island form, under the conditions of a temperature of 180°C, a pressure of 100 kg/cm², and a process time of 0.5 second. The polyester film was peeled off thereby to transfer the magnetic recording layer onto the card substrate (FIG. 11).

The laminated structure thus formed was clamped between stainless-steel plates of 0.5-mm thickness which had been mirror finished and was heated and pressed under the conditions of 150°C and 25 kg/cm² for 20 minutes. After cooling, a card structure in which the oversheets and the core sheet had been heat fused and laminated was obtained, and the desired magnetic plastic card, as shown in FIGS. 13 and 14, having a magnetic recording layer of island form, which had been imbedded in the card substrate so that their outer surfaces lay flush in the same plane, was obtained.

### Example 2
(according to the first fundamental mode of practice)

The surface of a temporary support comprising a polyester film of 50-µm thickness was coated to a coating thickness of 0.5 µm with a paint of an acrylic ester by a gravure coating process thereby to form a releasing layer.

Onto this releasing layer, a coloring paint comprising a vinyl chloride-vinyl acetate copolymer as a principal binder and a desired coloring matter dispersed therein was applied as a coating of a thickness of 2 µm by a gravure coating process thereby to form a colored layer.

This colored layer was coated to a coating thickness of 15 µm with a magnetic paint by a roll coating process, the magnetic paint comprising a vinyl chloride-vinyl acetate copolymer as a principal binder and powder particles of $\gamma$-Fe$_2$O$_3$ dispersed therein. Thus a magnetizable layer was formed.

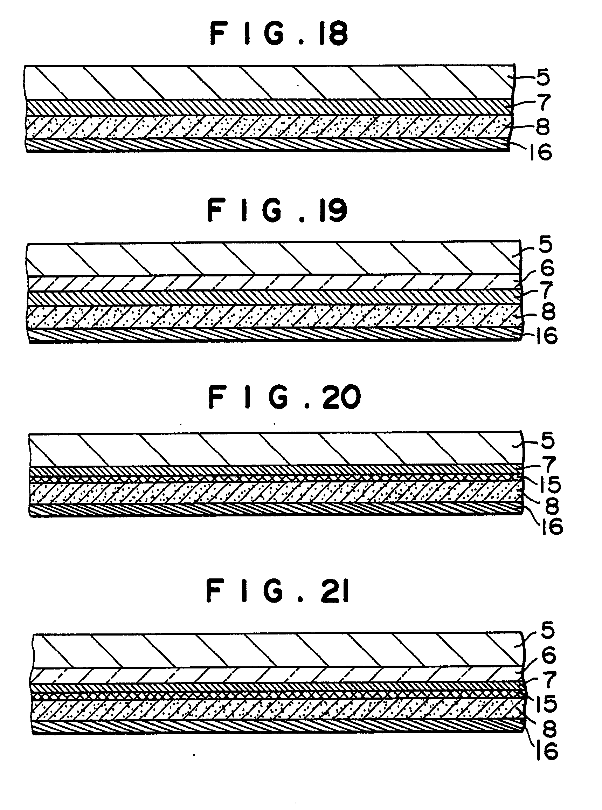

Onto this magnetizable layer, a varnish having an acrylic resin as a predominant component was applied as an adhesive coating layer of a thickness of 10 µm by a roll coating process, whereupon a magnetic transfer sheet as shown in FIG. 19 was obtained.

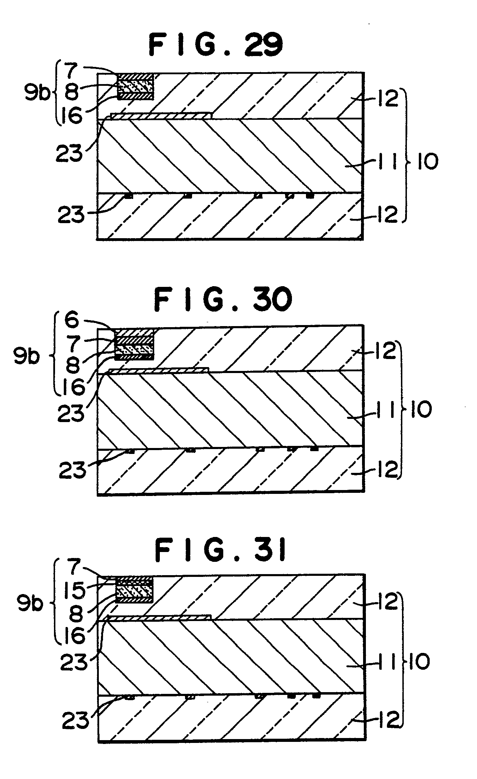

With the use of this magnetic transfer sheet, the procedures of Example 1 were followed to carry out partial die cutting, removal of superfluous parts of the magnetic recording layer, transferring of the magnetic recording layer, and heating and pressing. The magnetic recording layer of island form was thus imbedded within the card substrate so that its outer surface lay flush in the same plane as that of the card substrate. As a result, the desired magnetic plastic card, as shown in FIG. 30, having a magnetic recording layer of island form was obtained.

### Example 3
### (according to the preferred embodiment of the first fundamental mode of practice)

On the magnetic recording layers of island form with respect to the magnetic plastic cards produced in Example 1 and Example 2, characters, designs, etc. were provided with silk screen ink of a desired coloring matter and by silk screen printing as printed layers of the characters and designs of a thickness of 3 µm.

The aforedescribed card substrates were again clamped between stainless-steel plates of 0.5-mm thickness with mirror-finished surfaces, heated and pressed under the conditions of 150°C and 25 kg/cm$^2$ for 20 minutes, and cooled. As a result, the printed layers of the characters and design were imbedded within the magnetic recording layers, and magnetic plastic cards having island-form, magnetic recording layers with desired characters and designs, in each of which the outer surfaces of the card substrate, the magnetic recording layer, and the printed layer of the characters and design lay flush in the same plane, were obtained (FIGS. 40, 45).

### Example 4
### (according to the second fundamental mode of practice)

The surface of a temporary support comprising a polyester film of 50-µm thickness was coated to a coating thickness of 0.5 µm with a paint comprising an acrylic ester resin by a gravure coating process thereby to form a releasing layer.

Onto this releasing layer was applied as a coating of 2-µm thickness a coloring paint comprising a vinyl chloride-vinyl acetate copolymer as a principal binder and a desired coloring matter dispersed therein, which was applied by a roll coating process. A colored layer was thus formed.

Onto this colored layer, a magnetic paint comprising a vinyl chloride-vinyl acetate copolymer as a principal binder and powder particles of $\gamma$-Fe$_2$O$_3$ dispersed therein was applied as a coating of 15-µm thickness by a roll coating process thereby to form a magnetizable layer (FIG. 5).

Then, with the use of a seal-printing, die-cutting press and, moreover, a cutting die of a desired shape, partial die cutting from the magnetic recording layer side was so carried out as not to cut the support structure for transferring. Superfluous parts of the magnetic recording layer, other than the desired part thereof of island form, where then removed thereby to form a magnetic transfer sheet, as shown in FIGS. 8 and 9, in which the magnetic recording layer of island form was caused to remain.

In this connection, the pitch or spacing interval with which the partial die cutting of the magnetic transfer sheet was made the same as the pitch of the multiple repeated pattern printed in succession on the core sheet.

The above described magnetic transfer sheet was then superposed on an oversheet for surface purpose, and heat transferring was carried out under the conditions of a heating temperature of 180°C, a speed of 5 meters/min., and a pressure of 10 kg/30 cm$^2$ as indicated in FIGS. 53 and 54.

The above mentioned oversheet was then tentatively secured (with an adhesive at parts outside of the finished product) in register with a desired position with respect to the pattern of the core sheet which had been offset printed, and on the back face, also, a transparent oversheet was similarly secured tentatively as indicated in FIG. 55.

The structure thus formed was clamped between stainless-steel plates of 0.5-mm thickness with mirror-finished surfaces and was heated and pressed under the conditions of 150°C and 25 kg/cm$^2$ for 20 minutes. After this structure was cooled, a card structure in which the oversheet and the core sheet had been laminated by heat fusion was obtained, and a magnetic plastic card as shown in FIGS. 13 and 14 having a magnetic recording layer of a desired island form whose outer surface lay flush in the same plane as that of the card substrate was obtained.

### Example 5

With respect to the magnetic plastic card produced in Example 4, characters, designs, etc. were provided with silk screen ink of a desired coloring matter and by silk screen printing as a printed layer of characters and designs of a thickness of 3 µm on the magnetic record layer of island form.

The aforedescribed card substrate was again clamped between stainless-steel plates of 0.5-mm thickness with mirror-finished surfaces, heated and pressed under the conditions of 150°C and 25 kg/cm$^2$ for 20 minutes, and cooled. As a result, the printed layer of the characters and design was imbedded within the magnetic recording layer, and a magnetic plastic card having a magnetic recording layer of island form with desired characters and designs, in which the outer surfaces of the card substrate, the magnetic recording layer, and the printed layer of the characters and design lay flush in the same plane, was obtained.

Example 6

The surface of a temporary support comprising a polyester film of 50-µm thickness was coated to a coating thickness of 0.5 µm with a paint comprising an acrylic ester resin by a gravure coating process thereby to form a releasing layer.

Onto this releasing layer was applied as a coating of 0.5-µm thickness a coloring paint comprising a vinyl chloride-vinyl acetate copolymer as a principal binder and a desired coloring matter dispersed therein, which paint was applied by a gravure coating process. A colored layer was thus formed.

Onto this colored layer was formed a layer of 500-Å thickness of aluminum by vacuum evaporation.

This aluminum layer was further coated to a coating thickness of 15 µm with a magnetic paint comprising a vinyl chloride-vinyl acetate copolymer as a principal binder and fine particles of $\gamma$-$Fe_2O_3$ dispersed therein, the magnetic paint being applied by a roll coating process. A magnetic transfer sheet having a magnetizable layer (FIG. 17) was thus formed.

With the use of magnetic transfer sheets as described hereinabove, magnetic plastic cards, each having magnetic recording layer of island form containing a pattern, were respectively produced by procedures according to Examples 1, 3, 4 and 5 (FIGS. 28, 43 and 47).

The rate of decrease of output due to the effect of the printed layer of characters and design in the electric-magnetic conversion characteristics of each of the cards produced according to Examples 1 through 6 was within 10 percent at a magnetic writing-in density of 210 FRPI, which was of an order well within allowable limits.

**Claims**

1. A process for producing magnetic cards which comprises:

a first step of forming a magnetic transfer sheet (3) by making a partial die cut of a closed figure in only the magnetic recording layer stock (9) of a magnetic transfer sheet (3) comprising a temporary support (5) and the magnetic recording layer stock (9) to be transferred laminated on the temporary support (5) and thereafter peeling off and removing, from the temporary support (5), parts of the magnetic recording layer stock (9) outside of the region encompassed by said closed-figure partial die cut thereby to cause a magnetic recording layer (9b) of island form of said region to be left on the temporary support (5);

a second step of transferring the magnetic recording layer (9b) of island form onto a card substrate (10) by placing the surface of the magnetic recording layer (9b) of the magnetic transfer sheet (3) thus formed against the surface of the card substrate (10), heating the magnetic recording layer (9b) and removing the temporary support (5); and

a third step of imbedding the magnetic recording layer (9b) by placing a press plate with a mirror-finished surface on the magnetic recording layer (9b) thus transferred and heating and pressing the same into the card substrate (10) until the outer surface of the magnetic recording layer (9b) lies flush in the same plane as that of the card substrate (10).

2. A process according to claim 1 which further comprises a fourth step of printing a printed layer (24) of characters and design on the outer surface of the magnetic recording layer (9b) of the structure obtained after the third step of imbedding the magnetic recording layer and a fifth step of leveling the card surface by placing, after the fourth printing step, a press plate with a mirror-finished surface against the printed layer (24) thus printed and heating and pressing the printed layer thereby to cause the outer surfaces of the printed layer and the card substrate (10) to lie flush in the same plane.

3. A process for producing magnetic cards which comprises:

a first step of forming a magnetic transfer sheet (3) by making a partial die cut of a closed figure in only the magnetic recording layer stock of a magnetic transfer sheet (3) comprising a temporary support (5) and the magnetic recording layer stock (9) to be transferred laminated on the temporary support (5) and thereafter peeling off and removing, from the temporary support (5), parts of the magnetic recording layer stock (9) outside of the region encompassed by said closed-figure partial die cut thereby to cause a magnetic recording layer of island form of said region to be left on the temporary support (5);

a second step of placing the outer surface of the magnetic recording layer (9b) of island form of the magnetic transfer sheet (3) thus formed against a surface of an oversheet (12) and transferring the magnetic recording layer (9b) onto the oversheet (12) by heating the transfer sheet (3) and removing the temporary support (5);

a third step of securing or tentatively securing by adhesion the oversheet (12) to a core sheet (11); and

a fourth step of imbedding the magnetic recording layer (9b) by placing a press plate with a mirror-finished surface against the structure obtained by the third step and heating and pressing the same thereby to imbed the magnetic recording layer (9b) so that its outer surface lies flush in the same plane as that of the oversheet (12).

4. A process according to claim 3 which further comprises a fifth step of printing a printed layer (24) of characters and design on the outer surface of the magnetic recording layer (9b) of the structure obtained by the fourth step and a sixth step of levelling the card surface by placing, after the fifth printing step, a press plate with a mirror-finished surface against the oversheet (12) and heating and pressing the same thereby to cause the outer surfaces of the printed layer (24) and the oversheet (12) to lie flush in the same plane.

5. A process according to any of claims 1 through 4 in which the magnetic recording layer stock (9) formed on the temporary support (5) of the magnetic transfer sheet (3) has a magnetizable layer (8) comprising a binder resin and magnetic powder particles dispersed therein.

6. A process according to claim 5 in which the magnetic recording layer stock (9) further has a colored layer (7) between the temporary support (5) and the magnetizable layer (8).

7. A process according to claim 6 in which the magnetic recording layer stock (9) further has a nonmagnetic metal layer (15) formed by vapor deposition between the magnetizable layer (8) and the colored layer (7).

8. A process according to claim 5, 6 or 7 in which the magnetic recording layer stock (9) further has a releasing layer (6) inserted between the magnetizable layer (8) and the temporary support (5) and being in contact with the support (5) for transferring.

9. A process according to any of claims 5 through 8, in which the magnetic recording layer stock further has a heat-sensitive adhesive layer (16) on the magnetizable layer (8).

10. A magnetic card comprising a card substrate (10), a planar magnetic recording layer (9b) of island form being provided on at least one surface of the card substrate (10) and being so embedded therein that the outer surface of the magnetic recording layer (9b) lies flush in the same plane as that of the card substrate (10), characterized in that the magnetic recording layer (9b) of island form has smooth, fair peripheral edges, and that a printed layer (24) of characters and design is provided on and so embedded in the magnetic recording layer (9b) that the outer surface of the printed layer (24) lies flush in the same plane as the outer surface of the recording layer (9b).

11. A magnetic card according to claim 10 in which the card substrate (10) comprises a laminated structure of an opaque core sheet (11) and an oversheet (12) made of a transparent resin, and the magnetic recording layer (9b) is so imbedded in the oversheet (12) that their outer surfaces lie flush in the same plane.

12. A magnetic card according to claim 11 in which visible information is printed on the core sheet (11).

13. A magnetic card according to claim 10 or 11, in which the magnetic recording layer (9b) has a magnetizable layer (8) comprising a binder resin and magnetic powder particles dispersed in the binder resin.

14. A magnetic card according to claim 13 in which the magnetic recording layer (9b) further has a colored layer (7) on the magnetizable layer (8).

15. A magnetic card according to claim 14 in which the magnetic recording layer (9b) further has a non-magnetic metal layer (15) formed by vapor deposition and interposed between the magnetizable layer (8) and the colored layer (7).

16. A magnetic card according to claim 13, 14 or 15 in which the magnetic recording layer (9b) has a releasing layer (6) constituting an outer layer.

17. A magnetic card according to any of claims 13 through 16 in which the magnetic recording layer (9b) has a heat-sensitive adhesive layer underneath the magnetizable layer (8).

**Patentansprüche**

1. Verfahren zum Herstellen von magnetischen Karten, gekennzeichnet durch einen ersten Schritt zur Bildung eines magnetischen Übertragungsblattes (3), in dem ein teilweiser Stanzschnitt einer geschlossenen Figur in nur dem magnetischen Registrierschichtmaterial (9) eines magnetischen Übertragungsblattes (3) hergestellt wird, das ein zeitweiliges Auflager und das zu übertragende, auf dem zeitweiligen Auflager (5) als Schichten aufgebrachte magnetische Registrierschichtmaterial (9) enthält, worauf Teile des magnetischen Registrierschichtmaterials (9) außerhalb der teilweise stanzgeschnittenen geschlossenen Figur abgelöst und entfernt wird, um so eine inselförmige magnetische Registrierschicht (9b) der auf dem zeitweiligen Auflager (5) verbleibenden Region zu schaffen;

durch einen zweiten Schritt der Übertragung der inselförmigen magnetischen Registrierschicht (9b) auf ein Kartensubstrat (10), in dem die Oberfläche der magnetischen Registrierschicht (9b) des so gebildeten magnetischen Übertragungsblattes (3) gegen die Oberfläche des Kartensubstrats (19) gelegt wird, die magnetische Registrierschicht (9b) erhitzt und das zeitweilige Auflager entfernt wird; und

durch einen dritten Schritt des Einbettens der magnetischen Registrierschicht (9b), indem eine Pressplatte mit Spiegelschliffoberfläche auf die so übertragene magnetische Registrierschicht (9b) aufgelegt und diese erhitzt wird und in das Kartensubstrat (10) eingepreßt wird, bis die äußere Oberfläche der magnetischen Registrierschicht (9b) bündig in der gleichen Ebene wie diejenige des Kartensubstrates (10) liegt.

2. Verfahren zum Herstellen von magnetischen Karten, gekennzeichnet durch

einen vierten Schritt des Druckens einer Druckschicht (24) aus Schriftzeichen und einem Muster auf die Außenoberfläche der magnetischen Registrierschicht (9b) der nach dem dritten Schritt des Einbettens der magnetischen Registrierschicht erhalten worden ist, und

durch einen fünften Schritt der Einebnung der Kartenoberfläche, indem nach dem vierten Druckschritt eine Preßplatte mit Spiegelschliffoberfläche gegen die gedruckte Schicht (24) gelegt wird und diese gedruckte Schicht erhitzt und gepreßt wird, um dadurch die äußeren Oberflächen der gedruckten Schicht und des Kartensubstrates (10) zu veranlassen, bündig in der gleichen Ebene zu liegen.

3. Verfahren zum Herstellen von magnetischen Karten, gekennzeichnet durch einen ersten Schritt zur Bildung eines magnetischen Übertragungsblattes (3), indem ein teilweise Stanzschnitt einer geschlossenen Figur in nur dem magnetischen Registrierschichtmaterial (9) eines magnetischen Übertragungsblattes (3) hergestellt wird, das ein zeitweiliges Auflager (5) und das zu übertragende, auf dem zeitweiligen Auflager (5) als Schichten aufgebrachte magnetische Registrierschichtmaterial (9) enthält, worauf Teile des magnetischen Registrierschichtmaterials (9) außerhalb der teilweise stanzgeschnittenen geschlossenen Figur abgelöst und entfernt wird, um so eine inselförmige magnetische Registrierschicht (9b) der auf dem zeitweiligen Auflager (5) verbleibenden Region zu schaffen;

durch einen zweiten Schritt, bei welchem die Außenoberfläche der inselförmigen magnetischen Registrierschicht (9b) des so gebildeten magnetischen Übertragungsblattes (3) gegen eine Oberfläche eines Überblattes (12) gelegt wird und die magnetische Registrierschicht (9b) auf das Überblatt (12) übertragen wird, indem das Übertragungsblatt (3) erhitzt und das zeitweilige Auflager (5) entfernt wird;

durch einen dritten Schritt der Befestigung oder der versuchsweisen Befestigung des Überblattes (12) an einem Kernblatt (11) und

durch einen vierten Schritt des Einbettens der magnetischen Registrierschicht (9b) durch Anlegen einer Preßplatte mit Spiegelschliff-Fläche gegen die durch den dritten Schritt erhaltene Struktur und Erhitzen und Pressen dieser Struktur, um so die magnetische Registrierschicht (9b) einzubetten, sodaß ihre Außenfläche bündig in der gleichen Ebene liegt wie diejenige des Überblattes (12).

4. Verfahren zum Herstellen von magnetischen Karten nach Anspruch 3, gekennzeichnet durch einen fünften Schritt des Druckens einer Druckschicht (24) aus Schriftzeichen und einem Muster auf der Außenoberfläche der magnetischen Registrierschicht (9b) der durch den vierten Schritt erhaltenen Struktur und durch einen sechsten Schritt der Einebnung der Kartenoberfläche durch Anlegen einer Preßplatte mit Spiegelschliffoberfläche nach dem fünften Schritt gegen gas Überblatt (12) und durch Erhitzen und Pressen desselben, um dadurch zu erreichen, daß die Außenoberfläche der gedruckten Schicht (24) und des Überblattes (12) bündig in der gleichen Ebene liegen.

5. Verfahren zum Herstellen von magnetischen Karten nach einem der Ansprüche 1—4, dadurch gekennzeichnet, daß das auf dem zeitweiligen Auflager (5) des magnetischen Übertragungsblattes (3) gebildete magnetische Registrierschichtmaterial (9) eine magnetisierbare Schicht (8) enthält, die aus einem Binderharz mit darin verteilten Magnetpulverteilchen besteht.

6. Verfahren zum Herstellen von magnetischen Karten nach Anspruch 5, dadurch gekennzeichnet, daß das magnetische Registrierschichtmaterial (9) zwischen dem zeitweiligen Auflager (5) und der magnetisierbaren Schicht (8) eine gefärbte Schicht (7) aufweist.

7. Verfahren zum Herstellen von magnetischen Karten nach Anspruch 6, dadurch gekennzeichnet, daß das magnetische Registrierschichtmaterial (9) eine nicht-magnetische Metallschicht (15) aufweist, die durch Ablagerung aus der Dampfphase zwischen der magnetisierbaren Schicht (8) und der gefärbten Schicht (7) gebildet ist.

8. Verfahren zum Herstellen von magnetischen Karten nach Anspruch 5, 6 oder 7, dadurch gekennzeichnet, daß das magnetische Schichtmaterial (9) eine Löseschicht (6) aufweist, die zwischen die magnetisierbare Schicht (8) und das zeitweilige Auflager (5) eingesetzt ist und sich in Kontakt mit dem Auflager (5) für die Übertragung befindet.

9. Verfahren zum Herstellen von magnetischen Karten nach einem der Ansprüche 5—8, dadurch gekennzeichnet, daß das magnetische Registrierschichtmaterial eine wärmeempfindliche Klebstoffschicht (16) auf der magnetisierbaren Schicht (8) aufweist.

10. Magnetkarte mit einem Kartensubstrat (10), mit einer inselförmigen, ebenen magnetischen Registrierschicht (9b), die auf wenigstens einer Oberfläche des Kartensubstrats (10) vorgesehen ist und darin so eingebettet ist, daß die Außenoberfläche der magnetischen Registrierschicht (9b) bündig in der gleichen Ebene liegt wie diejenige des Kartensubstrates, dadurch gekennzeichnet, daß die inselförmige magnetische Registrierschicht (9b) glatte, saubere Umfangskanten besitzt und daß eine gedrückte Schicht (24) mit Buchstaben und einem Muster auf der magnetischen Registrierschicht (9b) vorgesehen ist und in diese so eingebettet ist, daß die Außenoberfläche der gedruckten Schicht (24) bündig in der gleichen Ebene liegt wie die Außenoberfläche der Registrierschicht (9d).

11. Magnetkarte nach Anspruch 10, dadurch gekennzeichnet, daß das Kartensubstrat (10) eine Schichtstruktur aus einem undurchsichtigen Kernblatt (11) und einem Überblatt (12) aus einem transparenten Harz umfaßt und daß die magnetische Registrierschicht (9b) so in die Überschicht (12) eingebettet ist, daß ihre äußeren Oberflächen bündig in der gleichen Ebene liegen.

12. Magnetkarte nach Anspruch 11, in welcher auf das Kernblatt (11) eine sichtbare Information aufgedruckt ist.

13. Magnetkarte nach Anspruch 10 oder 11, dadurch gekennzeichnet, daß die magnetische Registrierschicht (9b) eine magnetisierbare Schicht (8) aufweist, die ein Bindeharz und in dem Bindeharz verteilte magnetische Pulverteilchen enthält.

14. Magnetkarte nach Anspruch 13, dadurch gekennzeichnet, daß die magnetische Registrierschicht (9b) eine gefärbte Schicht (7) auf der magnetisierbaren Schicht (8) aufweist.

15. Magnetkarte nach Anspruch 14, dadurch gekennzeichnet, daß die magnetische Registrierschicht (9b) eine durch Ablagerung aus der Dampfphase gebildete nicht-magnetische Metallschicht (15) aufweist, die zwischen der magnetisierbaren Schicht (8) und der gefärbten Schicht (7) angeordnet ist.

16. Magnetkarte nach Anspruch 13, 14 oder 15, dadurch gekennzeichnet, daß die magnetische Registrierschicht (9b) eine Löseschicht (6) aufweist, welche eine äußere Schicht bildet.

17. Magnetkarte nach einem der Ansprüche 13—16, dadurch gekennzeichnet, daß die magnetische Registrierschicht (9b) unter der magnetisierbaren Schicht (8) eine wärmeempfindliche Klebstoffschicht besitzt.

## Revendications

1. Procédé de fabrication de cartes magnétiques, qui comprend:

une première étape de formation d'une feuille magnétique (3) de report par découpe partielle d'une figure fermée dans la seule couche d'enregistrement magnétique (9) d'une feuille magnétique (3) de report comprenant un support temporaire (5) et la couche d'enregistrement magnétique (9) à reporter sous forme collée au support temporaire, celui-ci étant destiné à être retiré par pelage, et par enlèvement du support temporaire (5) de parties de la couche d'enregistrement magnétique (9) qui se trouvent en dehors de la région entourée par la découpe partielle en forme de figure fermée afin qu'une couche d'enregistrement magnétique (9b) sous forme d'un îlot de ladite région reste sur le support temporaire (5),

une seconde étape de report de la couche d'enregistrement magnétique (9b) sous forme d'un îlot sur un substrat (10) d'une carte par disposition de la surface de la couche d'enregistrement magnétique (9b) de la feuille magnétique (3) de report ainsi formée contre la surface du substrat (10), par chauffage de la couche d'enregistrement magnétique (9b) et par enlèvement du support temporaire (5), et

une troisième étape d'enrobage de la couche d'enregistrement magnétique (9b) par disposition d'un plateau de pression ayant une surface à finition miroir sur la couche d'enregistrement magnétique (9b) ainsi reportée et par chauffage et compression de cette couche afin qu'elle pénètre dans le substrat (10), jusqu'à ce que la surface externe de la couche d'enregistrement magnétique (9b) se trouve dans le même plan que la surface du substrat (10) de la carte.

2. Procédé selon la revendication 1, comprenant en outre une quatrième étape d'impression d'une couche imprimée (24) formée de caractères et d'un dessin à la surface externe de la couche d'enregistrement magnétique (9b) de la structure obtenue après la troisième étape d'enrobage de la couche d'enregistrement magnétique, et une cinquième étape de mise au même niveau de la surface de la carte par disposition, après la qua-trieme étape d'impression, d'un plateau de pression ayant une surface à finition miroir contre la couche imprimée (24) ainsi imprimée et par chauffage et compression de cette couche de manière que les surfaces externes de la couche imprimée et du substrat (10) de la carte se trouvent dans le même plan.

3. Procédé de fabrication de cartes magnétiques, qui comprend:

une première étape de formation d'une feuille magnétique (3) de report par exécution d'une découpe partielle constituant une figure fermée dans la seule couche d'enregistrement magnétique d'une feuille magnétique (3) de report comprenant un support temporaire (5) et la couche d'enregistrement magnétique (9) à reporter sous forme collée sur la support temporaire (5) puis à être retirée par pelage, et par enlèvement, du support temporaire (5), de parties de la couche d'enregistrement magnétique (9) se trouvant en dehors de la région entourée par la découpe partielle en forme de figure fermée, si bien qu'une couche d'enregistrement magnétique formant un îlot dans ladite région reste sur le support temporaire (5),

une seconde étape de disposition de la surface externe de la couche d'enregistrement magnétique (9b) sous forme d'un îlot de la feuille magnétique (3) de report ainsi formée contre une surface d'une feuille de recouvrement (12), et de report de la couche d'enregistrement magnétique (9b) sur la feuille de recouvrement (12) par chauffage de la feuille de report (3) et enlèvement du support tem-poraire (5),

une troisième étape de fixation ou d'essai de fixation par collage de la feuille de recouvrement (12) sur une feuille d'âme (11), et

une quatrième étape d'enrobage de la couche d'enregistrement magnétique (9b) par disposition d'un plateau de pression ayant une surface à finition miroir contre la structure obtenue au cours de la troisième étape, et par chauffage et compression de la structure afin que la couche d'enregistrement magnétique (9b) soit enrobée, sa surface externe se trouvant dans le même plan que la surface de la feuille de recouvrement (12).

4. Procédé selon la revendication 3, qui comprend en outre une cinquième étape d'impression d'une couche imprimée (24) de caractères et d'un dessin à la surface externe de la couche d'enregistrement magnétique (9b) de la structure obtenue après la quatrième étape, et une sixième étape de mise au même niveau de la surface de la carte par disposition, après la cinquième étape d'impression, d'un plateau de pression ayant une surface à finition miroir contre la feuille de recouvrement (12), et par chauffage et compression de cette feuille afin que les surfaces externes de la couche imprimée (24) et de la feuille de recouvrement (12) se trouvent dans le même plan.

5. Procédé selon l'une quelconque des revendications 1 à 4, dans lequel la couche d'enregistrement magnétique (9) formée sur le support temporaire (5) de la feuille magnétique (3) de report a une couche aimantable (8) comprenant une résine formant un liant et des particules d'une poudre magnétique dispersées dans le liant.

6. Procédé selon la revendication 5, dans lequel la couche d'enregistrement magnétique (9) a en outre une couche colorée (7) placée entre la support temporaire (5) et la couche aimantable (8).

7. Procédé selon la revendication 6, dans lequel la couche d'enregistrement magnétique (9) a en outre une couche d'un métal non magnétique (15) formée par dépôt en phase vapeur entre la couche aimantable (8) et la couche colorée (7).

8. Procédé selon l'une quelconque des revendications 5, 6 et 7, dans lequel la couche d'enregistrement magnétique (9) a en outre une couche de démoulage (6) disposée entre la couche aimantable (8) et la support temporaire (5) et au contact du support (5) en vue du report.

9. Procédé selon l'une quelconque des revendications 5 à 8, dans lequel la couche d'enregistrement magnétique a en outre une couche adhésive thermosensible (16) placée sur la couche aimantable (8).

10. Carte magnétique comprenant un substrat (10), une couche plane d'enregistrement magnétique (9b) sous forme d'un îlot formée sur une face au moins du substrat (10) et enrobée à l'intérieur de manière que la surface externe de la couche d'enregistrement magnétique (9b) se trouve dans le même plan que la surface du substrat (10), caractérisée en ce que la couche d'enregistrement magnétique (9b) sous forme d'un îlot a des bords périphériques réguliers et nets, et en ce qu'une couche imprimée (24) de caractères et d'un dessin est disposée sur la couche d'enregistrement magnétique (9b) et est enrobée dans cette couche d'une manière telle que la surface externe de la couche imprimée (24) se trouve dans le même plan que la surface externe de la couche d'enregistrement (9b).

11. Carte magnétique selon la revendication 10, dans laquelle le substrat (10) est une structure stratifiée comprenant une feuille opaque d'âme (11) et une feuille de recouvrement (12) formée d'une résine transparente, et la couche d'enregistrement magnétique (9b) est enrobée dans la feuille de recouvrement (12) de manière que leurs surfaces externes se trouvent dans le même plan.

12. Carte magnétique selon la revendication 11, dans laquelle des informations visibles sont imprimées sur la feuille d'âme (11).

13. Carte magnétique selon l'une des revendications 10 et 11, dans laquelle la couche d'enregistrement magnétique (9b) a une couche aimantable (8) contenant une résine formant un liant et des particules d'une poudre magnétique dispersées dans la résine du liant.

14. Carte magnétique selon la revendication 13, dans laquelle la couche d'enregistrement magnétique (9b) a en outre une couche colorée (7) placée sur la couche aimantable (8).

15. Carte magnétique selon la revendication 14, dans laquelle la couche d'enregistrement magnétique (9b) a en outre une couche d'un métal non magnétique (15) formée par dépôt en phase vapeur et disposée entre la couche aimantable (8) et la couche colorée (7).

16. Carte magnétique selon l'une quelconque des revendications 13, 14 et 15, dans dans laquelle la couche d'enregistrement magnétique (9b) a une couche de démoulage (6) constituant une couche externe.

17. Carte magnétique selon l'une quelconque des revendications 13 à 16, dans laquelle la couche d'enregistrement magnétique (9b) a une couche adhésive thermosensible placée sous la couche aimantable (8).

# FIG.1
## PRIOR ART

# FIG.2
## PRIOR ART

# FIG.3
## PRIOR ART

# F I G . 4
## PRIOR ART
### (a)

### (b)

# F I G . 5

3

5
6
7
9
8

# F I G . 6

8        21

VII                                    VII

# F I G . 7

21

5

6
7
9
8

21

# F I G . 8

3b   9b      5

IX                                    IX

# F I G . 9

# F I G . 10

# F I G . 11

# F I G . 12

# F I G . 13

# F I G . 14

## F I G . 15

5
7
8

## F I G . 16

5
7
15
8

## F I G . 17

5
6
7
15
8

# F I G . 18

- 5
- 7
- 8
- 16

# F I G . 19

- 5
- 6
- 7
- 8
- 16

# F I G . 20

- 5
- 7
- 15
- 8
- 16

# F I G . 21

- 5
- 6
- 7
- 15
- 8
- 16

## F I G . 22

## F I G . 23

## F I G . 24

## F I G . 25

# FIG. 26

# FIG. 27

# FIG. 28

# F I G . 29

# F I G . 30

# F I G . 31

# F I G . 32

# F I G . 33

# F I G . 34

0 071 850

# FIG. 35

# FIG. 36

13

# F I G . 37

24     24

6
7  } 9b
8
12 } 10
11

# F I G . 38

F  24     24   F

6
7  } 9b
8
12 } 10
11

F         F

# F I G . 39

DNP BANK

ACCOUNT NO
EXPIRES ON

# F I G . 40

# F I G. 41

# F I G. 42

# F I G. 43

# F I G. 44

# F I G. 45

# F I G. 46

## F I G. 47

## F I G. 48

## F I G. 49

# F I G . 50

# F I G . 51

# F I G . 52

# F I G. 53

# F I G. 54

# F I G. 55

# F I G . 56